# EUROPEAN PATENT APPLICATION

(11) **EP 1 721 652 A1**
(43) Date of publication of application: **15.11.2006**
(21) Application number: 06252332.9
(22) Date of filing: 02.05.2006
(51) Int. Cl.: B01D 45/12, A47L 9/16

(54) **Filtering device for filtering extremely fine dust**

(30) Priority: 02.05.2005 DE 102005020400
(71) Applicant: Positec Power Tools (Suzhou) Co., Ltd., Suzhou 215006 (CN)
(72) Inventor: Borinato, Gianni, 36015 Schio (VI) (IT)
(74) Representative: Stuttard, Garry Philip

(57) **Abstract**

The filtering device (10) comprises a cylindrical dust chamber (38) and an air and dust input room (54) positioned above the dust chamber (38). A large number of cyclones (36) having a small diameter extends from the input room (54) to the dust chamber (38). The cyclones (36) are arranged in circular arrays (76, 78). A tube connector (34) is fixed to the lower end of the dust chamber (38) and a suction tube (64) is connected between the tube connector (34) and the input room (54). Air (a) and dust (d) generated by a masonry tool (2) during operation are collected by a fine-dust collector (12) and transmitted via the tubes (16, 64) to the input room (54) for distribution to the inputs of the cyclones (36). The fine dust (d) separated from the air (a) falls into the dust chamber (38), while the air (a) will be released through air outlets (32), in most instances directly into the environment of the filtering device (10).

## Description

This invention relates to a filtering device for filtering extremely fine dust which is developed (for example) in large quantities from an abrasive masonry tool, such as dust from a grinder for grinding or cutting a work piece of a masonry material or from a polisher for polishing a work piece of a masonry material (eg marble, brick, concrete or stone).

It is well-known that abrasive masonry tools such as grinders or polishers which may be very powerful (eg having a disc of 230 mm diameter) develop extremely fine dust during operation. This dust contains very small and light particles similar to smoke which are emitted in large quantities and at high speed. Even if their speed is considerably retarded, they may not fall down for a long period of time ie they may be suspended in the air (eg for a whole day). Such extremely fine particles may pose a health hazard to the operator of the tool and other personnel exposed to the dust.

Very fine dust is very difficult to filter, especially since large quantities of air containing such dust are emitted during grinding or polishing. If a filtering device is used, it should aim to collect fine dust particles close to their origin and to release clean air having essentially no dust particles. If a normal mechanical filter (made of a sieve-like material or of cloth) is used for this purpose, it clogs in a short period of time and consequently air can no longer pass the filter. Special filters have been developed such as electrostatic filter devices or water filter devices. These filter devices have significant drawbacks, namely they are expensive to purchase and produce.

In the field of sealing valves, it is known (EP-A-0256492) to use multiple cyclones ("multi-cyclone") arranged in partial circles (A and B) around a central axis. These cyclones are fed by a tube which is positioned centrally. The pure air outlet tubes of the cyclones extend into a chamber which is positioned in front of the valve and the dust outputs of the cyclones are connected to a residual air collecting channel. In this design, all cyclones are connected in parallel. However it is noteworthy that the residual air collection channel contains continuously flowing air polluted with the rest of the dust particles. As indicated above, such dust should not be released into the surroundings. Thus the sealing valve disclosed in EP-A-0256492 is not designed to eliminate extremely fine dust from polluted air to a large extent.

In the field of separating a medium into components of different particle masses (GB-A-2108 409), the application of parallel cyclones arranged in a circular or in a regular square configuration is known per se. However such design is not adapted to eliminate extremely fine dust from polluted air.

US-A-3682302 and DE-A-1910510 disclose an air separator for separating smaller particles from larger particles contained in air. This air separator is equipped with 17 cyclones arranged on a closed circle and connected in parallel to each other. The dust polluted air enters a ring-shaped air and dust input room where the heavier particles are separated. The lighter particles are attracted by a fan and emitted into the cyclones. From the dust outputs of the cyclones, these particles (with the exception of an unavoidable residue) leave through outlets which lead into a circular air duct from where they are transported away by air. The unavoidable residue is kept as small as possible by using pivoting flaps in the entrance passages so as to set the same for the smallest possible diameter of the dust particles. It will be realised that this requires hand operation by the operator, that the design is complex and that large quantities (per time unit) of polluted air cannot be cleaned adequately (especially if extremely fine dust is involved).

The present invention seeks to improve conventional filters by an arrangement which effectively eliminates fine dust from dust polluted air generated during (for example) masonry work so that clean air can be released into the environment.

According to an aspect of the present invention there is provided a filtering device comprising:
a) a first cylindrical housing containing a dust chamber having
   - a U-shaped cross section,
   - a central axis,
   - a bottom wall and
   - a ring-shaped side wall,
b) a tube connector on said side wall for connecting an external tube thereto, said tube connector being positioned close to said bottom wall, and said external tube being determined for attracting air and said fine dust from said tool,
c) a second cylindrical housing containing an air and dust input room positioned above said dust chamber, said cylindrical housing having
   - as its bottom wall a lower disc, which is provided with an aperture, preferably at its center,
   - as its ceiling an upper disc, which is provided with a plurality of perforations,
d) means for emptying said dust chamber from fine dust accumulated therein,
e) a suction tube
   - which, on its one end, is connected to said tube connector and
   - which, on its other end, is sealably connected to said aperture in said lower disc,
   wherein said suction tube preferably has its down-stream end portion arranged along said central axis,
f) a suction fan for sucking air and dust into said air and dust input room,
g) a motor for driving said fan via a shaft,
h) a plurality of cyclones,
   - wherein said cyclones have an inner diameter which is equal to or smaller than 40 mm,
   - wherein said cyclones are arranged parallel to each other and in at least one array, which preferably is circular,
   - wherein each of said cyclones has
      -- an air and dust input connected to said air and dust input room,
      -- a fine dust output opening into said dust chamber, and
      -- an air output connected to one of said perforations in said upper disc for emitting air from said cyclone, preferably directly into the environment.

The filtering device of the invention is advantageously inexpensive, compact and comparatively lightweight and can be positioned at an effective distance from a tool emitting the polluted air.

The filtering device may be used for filtering extremely fine dust which is developed in large quantities by an abrasive masonry tool such as dust from a grinder for grinding or cutting a work piece of a masonry material or from a polisher for polishing a work piece of a masonry material.

For effective filtering of fine dust, it has been found that in preferred embodiments at least 30 cyclones are provided. Each of the cyclones may have a diameter of approximately 25mm.

The array of cyclones preferably has a circular configuration.

In order to obtain a lightweight device, the cyclones may be made of a light metal such as aluminum or (preferably) a lightweight plastic.

There may be provided an external air and dust sucking tube for attracting air and fine dust from the work piece to the tube connector.

The means for emptying the dust chamber may comprise:
a) at least one lock for releasingly connecting said air and dust input room to said dust chamber or
b) a door at said dust chamber.

If extremely clean air is required (eg for cooling the motor) at least one mechanical filter may be arranged in the direction of airflow beyond the perforations. The mechanical filter stops some extra fine particles that might escape from the cyclones. The quantity is generally very low and the filter needs to be cleaned once in a while. This is necessary in any event to protect the motor-collector.

The fine-dust collector may be connected to the housing of a grinder, preferably of an angle grinder.

In a preferred embodiment, the filtering device comprises at least 15, preferably at least 30 cyclones.

Preferably the array is a closed circular array.

Preferably the air and dust inputs of the cyclones are tangential inputs.

Preferably the inputs of the cyclones are connected to the air and dust input room via connecting ducts.

Preferably there are provided an inner array and an outer array of the cyclones, wherein the outer array is arranged concentrically around the inner array.

Preferably an external air and dust sucking tube is provided for attracting air (a) and the fine dust (d) from the work piece to the tube connector.

Preferably the suction fan is positioned at the same level as the air and dust inputs of the cyclones.

Preferably the array of cyclones is arranged around the central axis of the dust chamber and the input room.

Preferably the sealing means are provided between the input room and the dust chamber.

Preferably the sucking tube is provided between a fine-dust collector for collecting air (a) and the fine dust (d) from a work piece and the tube connector.

Preferably the array of cyclones is partially arranged within the dust chamber and the air outputs of the cyclones are linear outlet tubes for emitting cleaned air (a) via the perforations.

Preferably the cyclones are made of a plastic material.

Preferably at least one mechanical filter is arranged in flow direction of the air (a) beyond the perforations.

Preferably air (a) cleaned by the cyclones is used for cooling the motor.

Preferably a motor cabinet containing the motor is positioned above the second cylindrical housing.

Preferably the fine-dust collector is connectable to the housing of a grinder, preferably of an angle grinder.

According to a further aspect of the invention there is provided an apparatus comprising:
a filtering device as defined hereinbefore and a grinder, preferably an angle grinder.

The present invention will now be described in a non-limitative sense with reference to the accompanying Figures in which:
Fig. 1 is a perspective view of a first embodiment of the filtering device of the invention associated with an angle grinder;
Fig. 2 is a cross-sectional view of the first embodiment of the invention;
Fig. 3 is a perspective phantom view of the filtering device;
Fig. 4 is a perspective view of two arrays of cyclones and a motor for driving a fan;
Fig. 5 is a perspective bottom view of the arrangement of Fig. 4;
Fig. 6 is a plane bottom view of the arrangement of Fig. 4;
Fig. 7 is a top view of the arrangement of Fig. 4;
Fig. 8 is an exploded perspective view of the arrangement of Fig. 3;
Fig. 9 is a cross-sectional view of a second embodiment of a filtering device of the invention;
Fig. 10 is a cross-sectional view of a third embodiment of a filtering device of the invention using also mechanical filters; and
Fig. 11 is a cross-sectional view of a fourth embodiment of a filtering device of the invention using mechanical filters and cleaned air for cooling the motor.

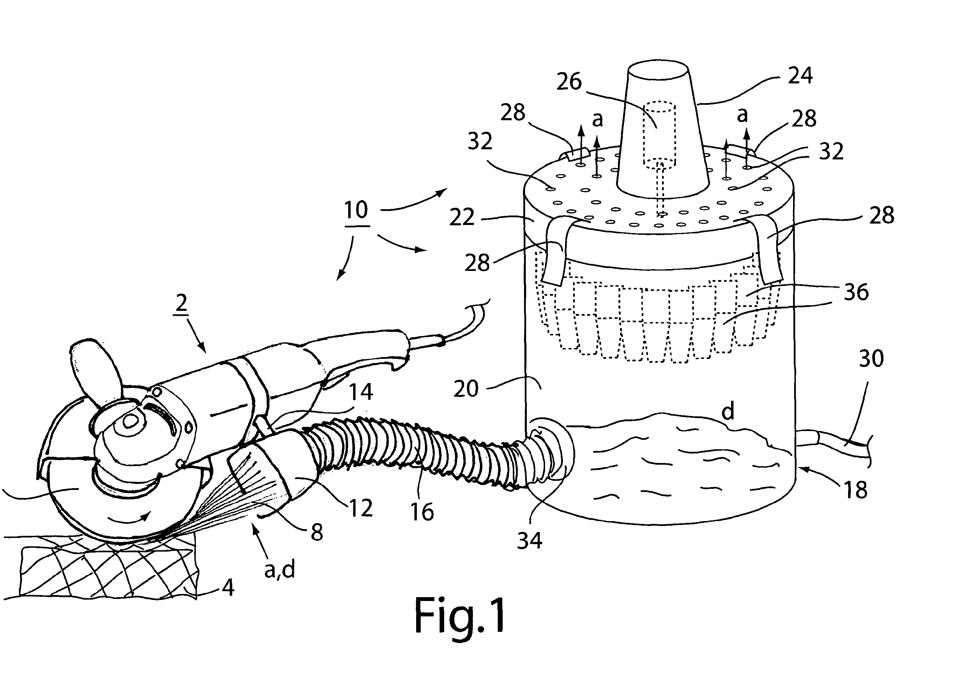

Fig. 1 illustrates a first embodiment of the invention in which an electric angle grinder 2 is provided for working on a work piece 4 such as a piece of marble. During operation of the grinding disc 6, very fine dust d is developed which is emitted with high velocity and in large quantities. The masonry dust d forms a fan 8 in the air a.

Since dust d is undesirable, a filtering device 10 is associated with the angle grinder 2. It is positioned in such a way as not to interfere with the operator. The filtering device 10 comprises a fine-dust collector 12 connected to the angle grinder 2 by means of a connecting bar 14, a flexible external sucking tube 16 and an essentially cylindrical compartment 18. The compartment 18 comprises a first or lower cylindrical housing 20 and a second or upper cylindrical housing 22 attached to the top of which is a motor cabinet 24 containing an electrical motor 26. The upper housing 22 is attached to the lower housing 20 by locks 28. It can be released easily in order to remove dust d accumulated in the lower housing 20. The motor 26 is powered by means of a cord 30 leading into the lower housing 20. The upper external wall of the upper housing 22 contains a larger number of outlet holes 32 in order to release cleaned air a (preferably directly into the surroundings).

A tube connector 34 is arranged on the lower portion of the first housing 20 for receiving the end of the flexible tube 16. Thus, air a and fine dust d collected by the fine-dust collector 12 can be introduced into the first housing 20.

The filtering device 10 comprises a large number of rather small cyclones 36 in an array (a multi-cyclone array) in a circular configuration connected in parallel to each other. 30 cyclones 36 of inner diameter 20-25 mm can effectively filter a large quantity of air a per minute which is polluted by extremely fine masonry dust d. The clean air a from the cyclones 36 may subsequently be emitted into the surroundings.

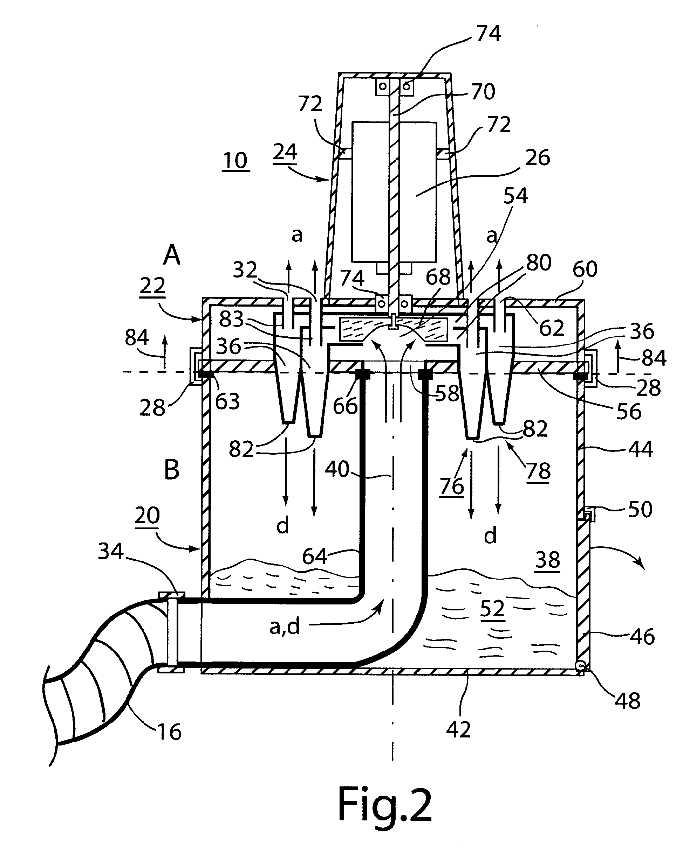

In Fig. 2 details of the interior of the filtering device 10 are illustrated. The lower cylindrical housing 20 contains a cylindrical dust chamber 38 which has a U-shaped cross-section and a central axis 40. The housing 20 has a bottom wall 42 and a ring-shaped side wall 44. The side wall 44 may be provided with an outlet door 46 which can be rotated about a pivot 48 and which can be locked by a door lock 50. Thus a pile 52 of fine dust d which has accumulated in the dust chamber 38 can be taken out. Alternatively the door 46 may be arranged in the bottom wall 42.

The tube connector 34 and the end of the tube 16 are positioned a small distance above the bottom wall 42. This advantageously contributes to good stability of the compartment 18 when placed on the ground.

The upper cylindrical housing 22 contains an air and dust input room 54. The upper housing 22 has as its bottom wall a lower plane disc 56 which is provided with a large aperture 58 at its centre. As its ceiling, it has an upper plane disc 60 which is provided with a large number of small perforations 62. A rubber sealing ring 63 is interposed between the top of the side wall 44 and the lower disc 56. As can be seen in Fig. 2, the locks 28 connect the side walls of the housings 20, 22 to each other.

One end of a suction tube 64 is connected to the tube connector 34. The other end is connected to the large aperture 58 by interposition of a sealing ring 66. The suction tube 64 serves to conduct air a and fine dust d from the work piece 2 in the direction indicated by a curved arrow. It has an L-shape wherein the downstream end portion is arranged along the central axis 40.

In the air and dust input room 54 there is positioned a suction fan 68 driven by the electrical motor 26 via a shaft 70. The motor 26 is supported by supports 72 within the motor cabinet and the shaft 70 is supported by ball bearings 74.

As mentioned above, a large number of rather small cyclones 36 is contained in the housings 20, 22. In this embodiment, there is provided an inner array 76 and an outer array 78 which both may be closed arrays. The outer array 78 is arranged concentrically around the inner array 76 and the central axis 40. Each of the cyclones 36 has its tangential air and dust input connected via a connecting duct 80 to the air and dust input room 54. These air and dust inputs are positioned at the same level as the suction fan 68.

The lower conical ends of the cyclones 36 including their dust outlets 82 are arranged within the dust chamber 38. Their outputs for cleaned air a are linear outlet tubes 83 which extend into or penetrate the smaller perforations 62. Either the ends of the outlet tubes 83 or the perforations 62 themselves form the outlet holes 32 for emitting cleaned air a. Since the cleaned air a contains only very few dust particles (if any at all) the cleaned air a can be released into the environment without exposing the operator of the tool 2 to a health hazard.

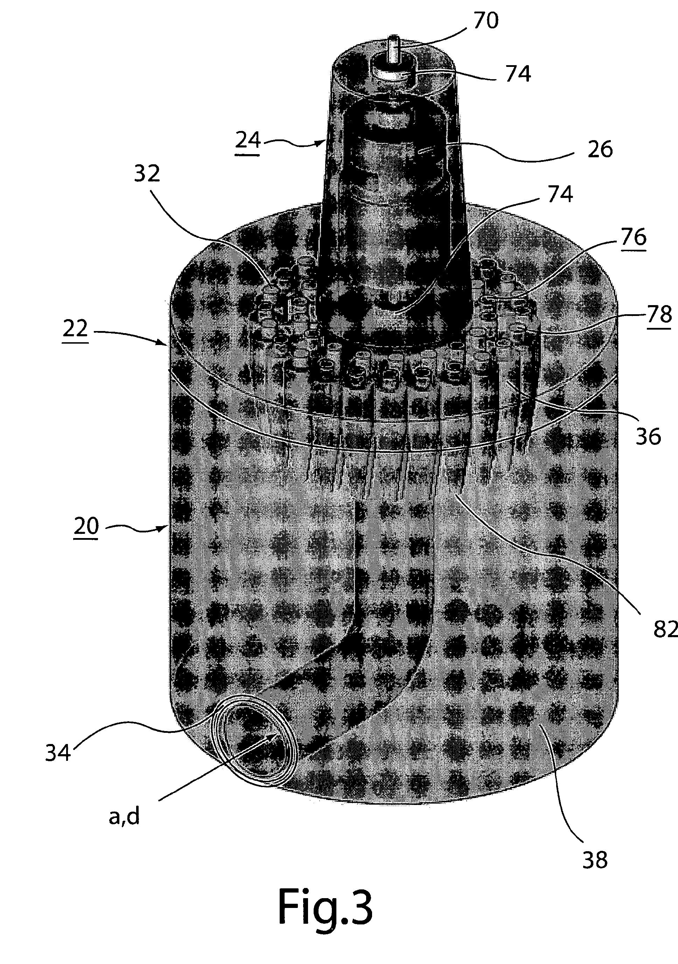

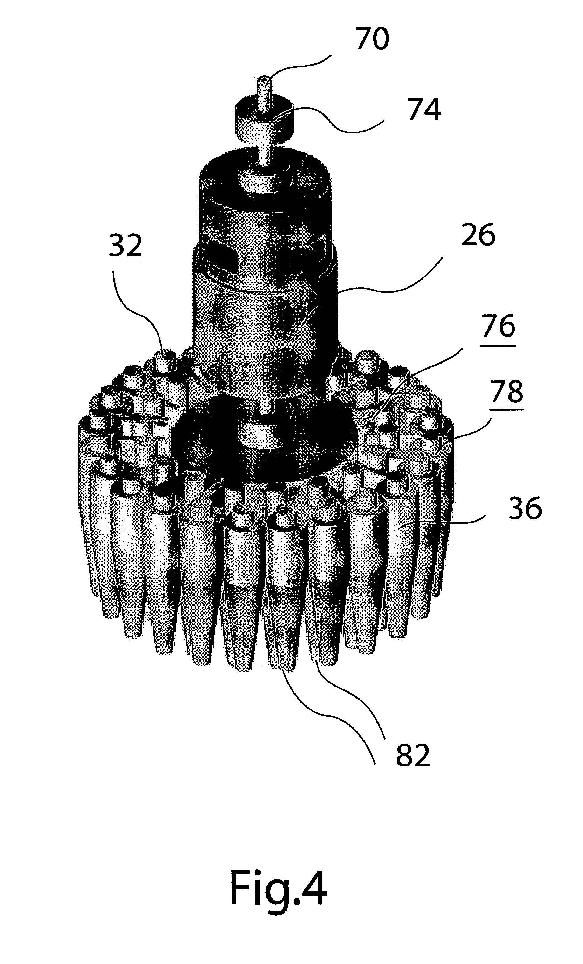

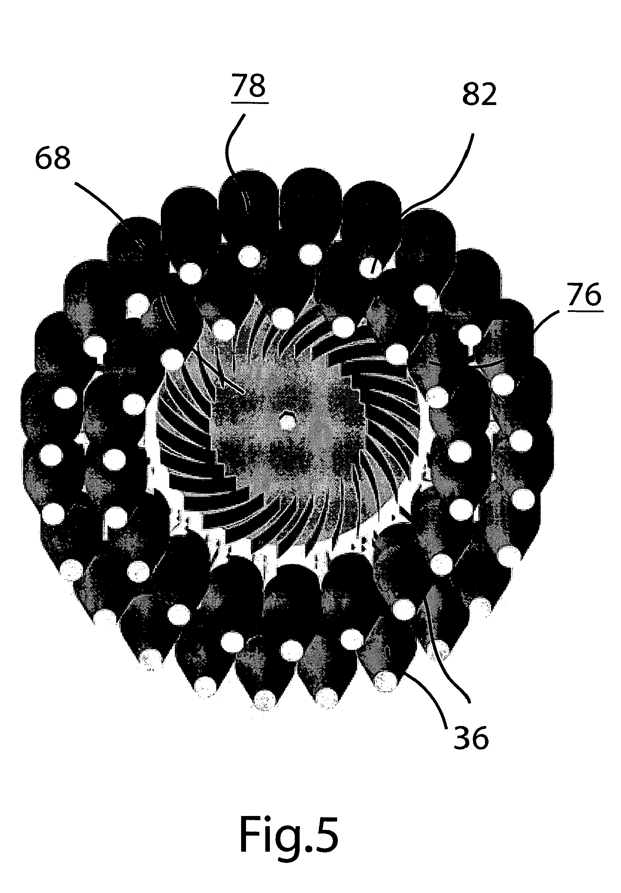

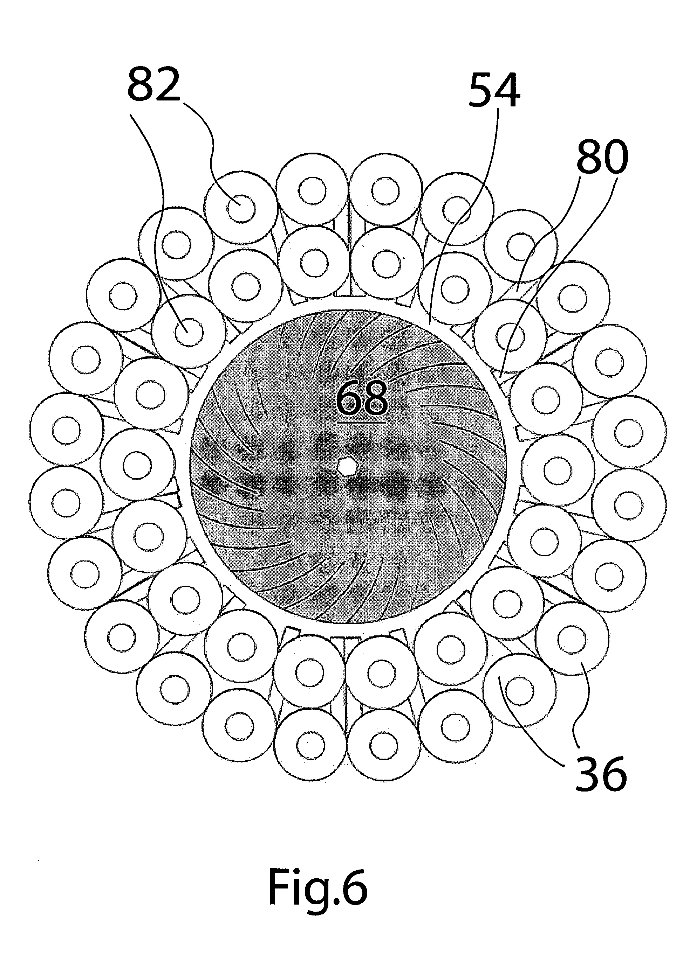

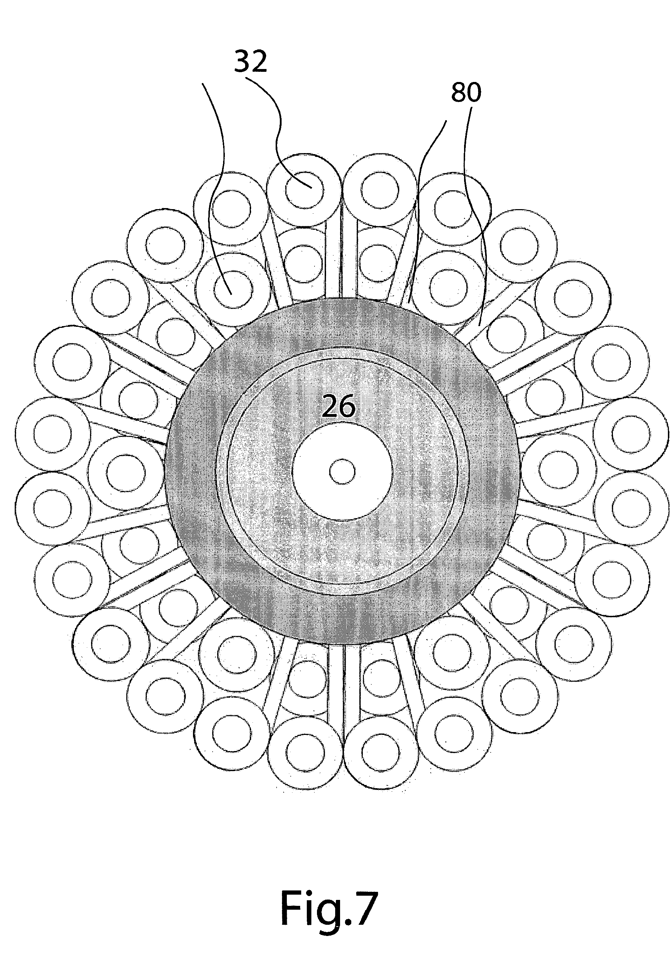

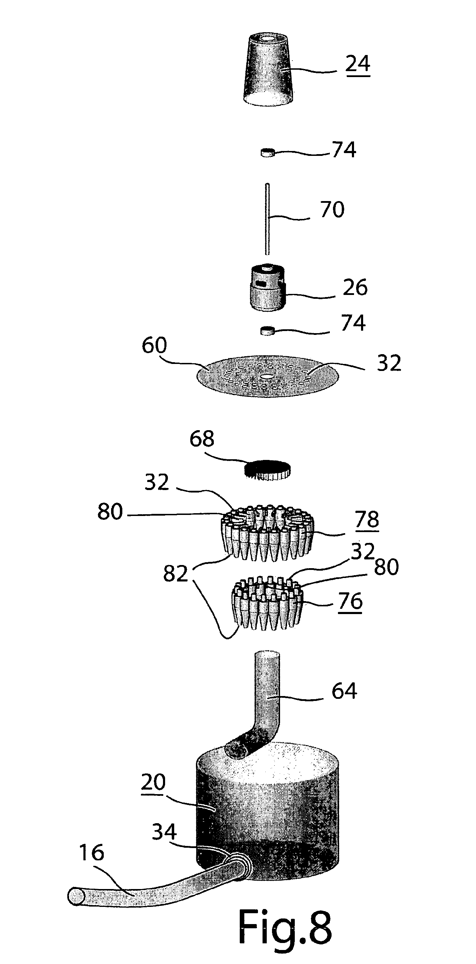

Figs. 3-8 indicate the two arrays 76, 78 of cyclones 36. If the need arises (for example if the amount of fine dust d developed is especially high), more than two arrays and a larger number of cyclones 36 may be provided.

It will be apparent from Figs. 1-8 that the device works as follows: Fine dust d developed by the tool 2 along with surrounding air a will be collected by the fine-dust collector 12 under the suction force of the suction fan 68. Air a and dust d will be transported via the tubes 16, 64 into the air and dust input room 54 and distributed via the connecting ducts 80 to the inputs of both arrays 76, 78 of cyclones 36. The fine dust d will be separated by them and fall through the dust outlets 82 into the dust chamber 38 to form a dust pile 52. The cleaned air a will leave the cyclones 36 via outlet tubes 83 and outlets 32 to the surroundings of the filtering device 10. Extraction of the accumulated dust d from the dust chamber 38 is performed by lifting the upper portion A from the lower portion B of the filtering device 10 in the direction of the arrows 84 (see Fig. 2) after unlocking the side locks 28.

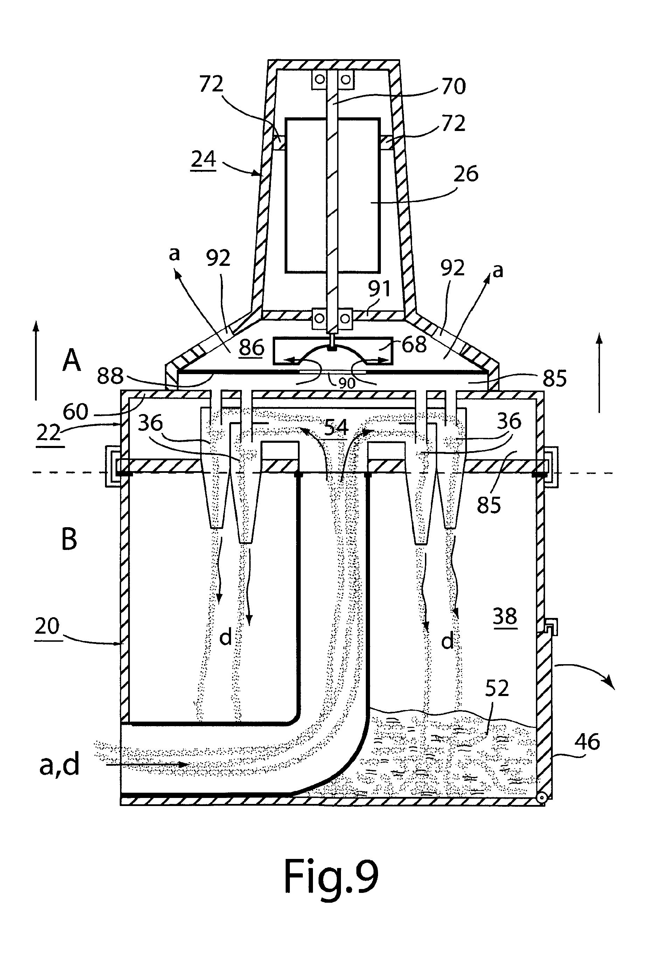

In the second basic embodiment shown in Fig. 9 (which is similar to Figs. 2-8 to a large degree), the suction fan 68 is not positioned in the air and dust input room 54 but in a separate fan room 86 beyond the upper disc 60. In order to form an air exit room 85 and such a fan room 86, a partition wall 88 having a central opening 90 is provided parallel to the disc 60. Additionally, an end wall 91 is provided. The fan room 86 has air exits 92 on its sides for releasing cleaned air a to the environment.

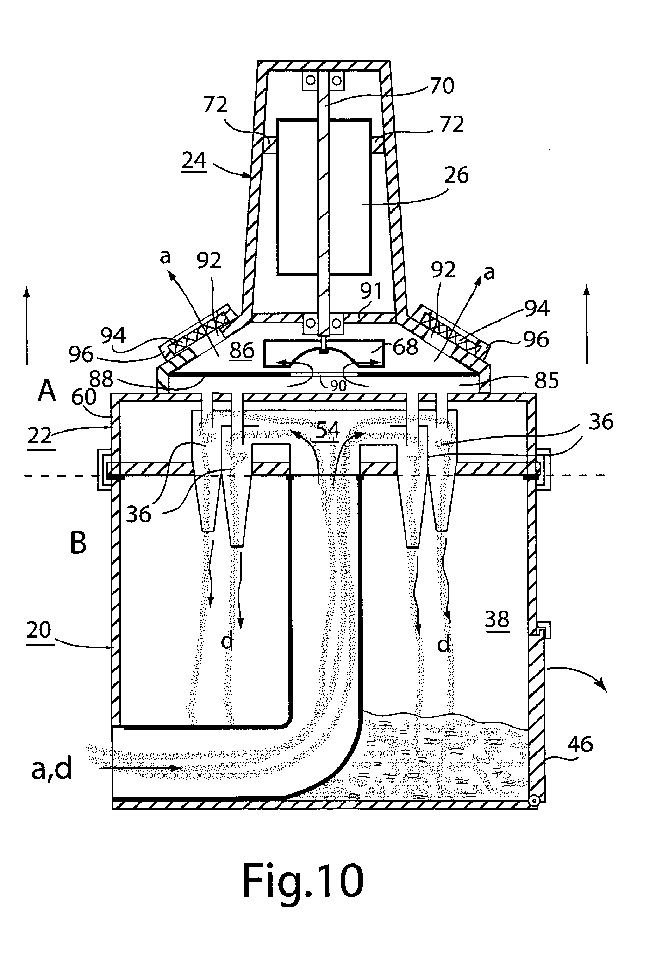

The third basic embodiment illustrated in Fig. 10 includes a modification of the embodiment of Fig. 9. In this case, the cleaned air a passes mechanical filters 94 (eg made of cloth or sponge) before it enters the environment. These filters 94 are arranged behind the air exits 92. They will catch the very small number of particles which may still be contained in the cleaned air a. Cleaning of the filters 94 is required only infrequently. Holders 96 make changing the filters 94 straightforward. In this embodiment, cooling air for the motor 26 is attracted in the conventional way. For this purpose the motor 26 has an additional fan (not shown) inside.

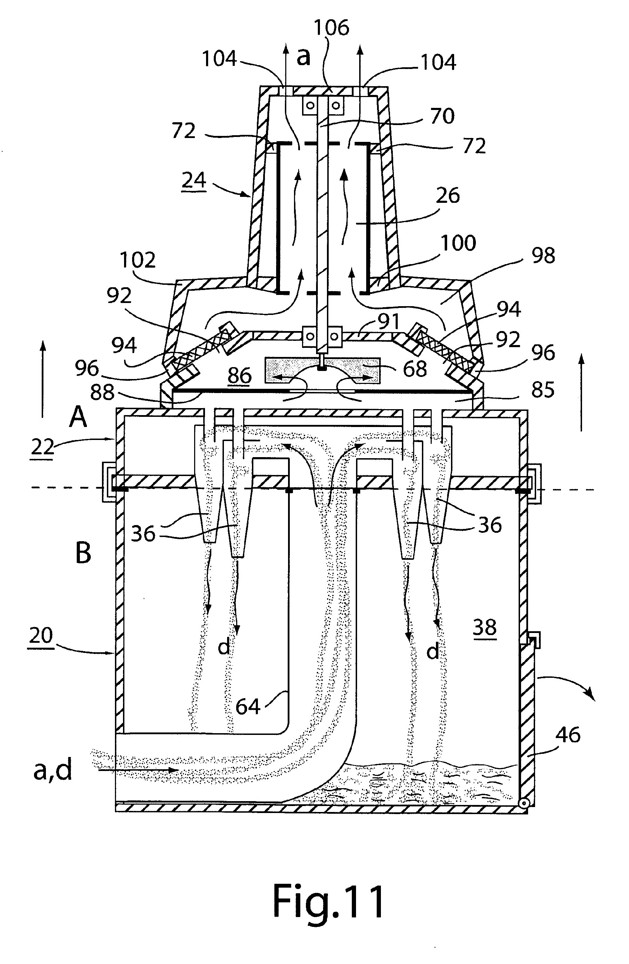

In the fourth basic embodiment illustrated in Fig. 11, the air a cleaned by the cyclones 36 and subsequently filtered by standard filters 94 is used for cooling the motor 26. The clean air a does not do any damage to the collector of the motor 26 since essentially all particles are removed. For this purpose, a clean air collection room 98 is arranged behind the filters 94 by means of a separation wall 100 and the side wall 102 of the lower portion of the motor housing 24. The cleaned and filtered air a will be guided along the outside of the motor 26 and parallel to the axis of the shaft 70 until it reaches a number of exit holes 104 in the top wall 106 of the motor housing 24 from where it is released into the environment.

## Claims

1. A filtering device (10) for filtering extremely fine dust (d) which is developed in large quantities by an abrasive masonry tool (2) comprising
a) a first cylindrical housing (20) containing a dust chamber (38) having
- a U-shaped cross section,
- a central axis (40),
- a bottom wall (42) and
- a ring-shaped side wall (44),
b) a tube connector (34) on said side wall (44) for connecting an external tube (16) thereto, said tube connector (34) being positioned close to said bottom wall (42), and said external tube being (16) adapted to attract air (a) and said fine dust (d) from said tool (2),
c) a second cylindrical housing (22) containing an air and dust input room (54) positioned above said dust chamber (38), said cylindrical housing (22) having
- as its bottom wall a lower disc (56) which is provided with an aperture (58), preferably at its center, and
- as its ceiling an upper disc (60) which is provided with a plurality of perforations (62),
d) means (28; 46) for emptying said dust chamber (38) from fine dust (d) accumulated therein,
e) a suction tube (64) which
- on a first end is connected to said tube connector (34) and
- on a second end is sealably connected to said aperture (58) in said lower disc (56),
wherein said suction tube (64) preferably has its down-stream end portion arranged along said central axis (40),
f) a suction fan (68) for sucking air (a) and dust (d) into said air and dust input room (54),
g) a motor (26) for driving said fan (68) via a shaft (70),
h) a plurality of cyclones (36),
- wherein said cyclones (36) have an inner diameter which is equal to or smaller than 40 mm,
- wherein said cyclones (36) are arranged parallel to each other and in at least one array (76, 78) which preferably is circular,
- wherein each of said cyclones (36) has
-- an air and dust input connected to said air and dust input room (54),
-- a fine dust output opening into said dust chamber (38) and
-- an air output connected to one of said perforations (62) in said upper disc (60) for emitting air (a) from said cyclone (36), preferably directly into the environment.

2. A filtering device (10) as claimed in claim 1 comprising at least 15, preferably at least 30 cyclones (36).

3. A filtering device (10) as claimed in claim 1 or 2, wherein said array (76, 78) is a closed circular array.

4. A filtering device (10) as claimed in any of claims 1 to 3, wherein said air and dust inputs of said cyclones (36) are tangential inputs.

5. A filtering device (10) as claimed in any of claims 1 to 4, wherein said inputs of said cyclones (36) are connected to said air and dust input room (54) via connecting ducts (80).

6. A filtering device (10) as claimed in any of claims 1 to 5, wherein there are provided an inner array (74) and an outer array (78) of said cyclones (36), and wherein said outer array (78) is arranged concentrically around said inner array (76).

7. A filtering device (10) as claimed in any of claims 1 to 6, wherein an external air and dust sucking tube (16) is provided for attracting air (a) and said fine dust (d) from said work piece (2) to said tube connector (34).

8. A filtering device (10) as claimed in any of claims 1 to 7, wherein said suction fan (68) is positioned at the same level as said air and dust inputs of said cyclones (36).

9. A filtering device (10) as claimed in any of claims 1 to 8, wherein said array (76, 78) of cyclones (36) is arranged around said central axis (40) of said dust chamber (38) and said input room (54).

10. A filtering device (10) as claimed in any of claims 1 to 9, wherein sealing means (63) are provided between said input room (54) and said dust chamber (38).

11. A filtering device (10) as claimed in any of claims 7 to 10, wherein said external sucking tube (16) is provided between a fine-dust collector (12) for collecting air (a) and said fine dust (d) from a work piece (4) and said tube connector (34).

12. A filtering device (10) as claimed in any of claims 1 to 11, wherein said array (76, 78) of cyclones (36) is partially arranged within said dust chamber (38), and wherein said air outputs of said cyclones (36) are linear outlet tubes for emitting cleaned air (a) via said perforations (62).

13. A filtering device (10) as claimed in either of claims 11 or 12, wherein said cyclones (36) are made of a plastic material.

14. A filtering device (10) as claimed in any of claims 1 to 13, wherein said means for emptying said dust chamber (38) comprises
a) at least one lock (28) for releasingly connecting said air and dust input room (54) to said dust chamber (38) or
b) a door (46) at said dust chamber (38).

15. A filtering device (10) as claimed in any of claims 1 to 14, wherein at least one mechanical filter (94) is arranged in flow direction of the air (a) beyond said perforations (62).

16. A filtering device (10) as claimed in any of claims 1 to 15 wherein air (a) cleaned by said cyclones (36) is used for cooling said motor (26).

17. A filtering device (10) as claimed in any preceding claim, wherein a motor cabinet (24) containing the motor (26) is positioned above said second cylindrical housing (22).

18. A filtering device (10) as claimed in any of claims 11 to 17, wherein said fine-dust collector (12) is connectable to the housing of a grinder (2), preferably of an angle grinder.

19. An apparatus comprising a filtering device (10) as defined in any preceding claim and a grinder (2), preferably an angle grinder.
